# EUROPEAN PATENT APPLICATION

(11) **EP 1 976 285 A1**
(43) Date of publication of application: **01.10.2008**
(21) Application number: 07006801.0
(22) Date of filing: 31.03.2007
(51) Int. Cl.: H04N 5/455, H04N 5/46, H04L 27/06

(54) **Digital demodulator and method for demodulating analogue television signals**

(71) Applicant: SONY DEUTSCHLAND GMBH, 10785 Berlin (DE)
(72) Inventor: Spalink, Gerd, 70327 Stuttgart (DE)
(74) Representative: Müller - Hoffmann & Partner

(57) **Abstract**

Method for digitally demodulating analogue television signals, wherein said analogue television signals comprise a video signal and a sound signal, comprising: converting said analogue television signal into a complex base band; following a phase and/or a frequency of a carrier of said video signal; and filtering said video signal with a vestigial band filter (500) after said step of following said phase and/or said frequency. A corresponding digital demodulator is presented as well.

## Description

The invention relates to a digital demodulator for analogue television signals. The invention also relates to a method for digitally demodulating analogue television signal.

### BACKGROUND

Analogue television signals are still used in different countries, even if digital TV signals are now becoming more and more popular. Conventional analogue television signals comprise a video signal and a sound signal. The video signal and the sound signal are demodulated separately in a video demodulation unit and a sound demodulation unit, respectively. Different countries throughout the world use different analogue television transmission systems, mostly abbreviated by a capital letter (e.g. system M for U.S.A, system L for France, system B/G or system I for countries with a PAL-system), which use different bandwidths for the video signal, different distances from the video signal to the sound signal or different group delays implemented by different transmitters.

It is therefore an object of the invention to provide a digital demodulator for analogue television signals and a method for digitally demodulating analogue television signals, which are better suited to be used in different analogue television signal transmission systems.

The object is solved by a digital demodulator and a method according to claims 1 and 10, respectively.

Further embodiments are defined in the dependent claims.

Further details of the invention will become apparent from a consideration of the drawings and ensuing description.

### BRIEF DESCRIPTION OF THE DRAWINGS

- Fig. 1: shows main steps of one embodiment of the invention;
- Fig. 2: shows a top level block diagram of a further embodiment;
- Fig. 3: shows a block diagram of the base band conversion block;
- Fig. 4: shows a block diagram of a channel selection block;
- Fig. 5: is showing a block diagram of a video demodulation block;
- Fig. 6: is showing a block diagram of a base band video block;
- Fig. 7: is showing an embodiment of a vestigial side band filter;
- Fig. 8: is showing a further embodiment of a vestigial side band filter; and
- Fig. 9: is showing a table summarizing different bandwidths and and center frequency adjustments for different analogue television systems.

### DETAILED DESCRIPTION

In the following, embodiments of the invention are described. It is important to note that all described embodiments in the following may be combined in any way, i.e. there is no limitation that certain described embodiments may not be combined with others.

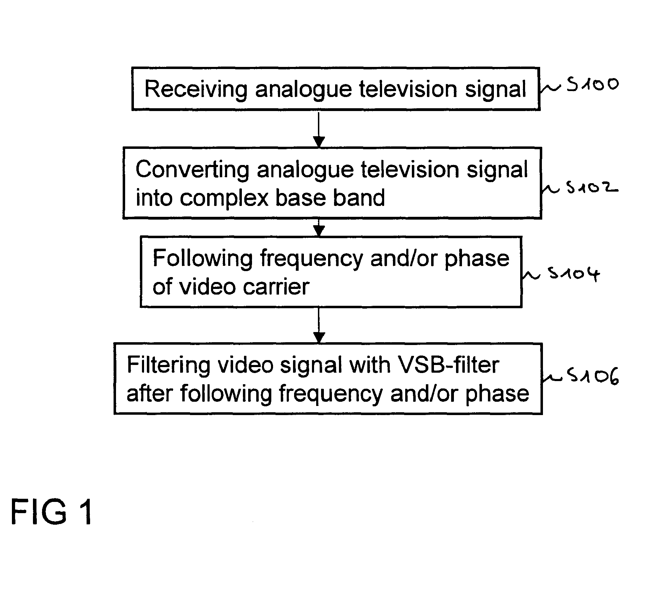

In Fig. 1, in step S100 an analogue television signal, which comprise a video signal is received. Said received analogue television signal may have different distances between the video signal and a sound signal, different bandwidths of the video signal and different group delays all depending of the analogue television signal transmission system which is used.

In step S102 the received analogue television signal is converted into a complex base band. In this complex base band further processing steps are easier to be performed than in the originally frequency range of the received analogue television signal.

In step S104 a frequency and/or a phase of a carrier of the video signal is followed, for example with the help of a phase locked loop (PLL). The wording "following of said frequency and/or the phase" of a carrier sometimes is sometimes replaced by "locking to the carrier". The carrier of the video signal in the following text is also referred to as "vision carrier" or "video carrier". The "video signal" might also be referred to as "vision signal".

In step S106 after said step S104 of following the video signal is filtered with a vestigial sideband filter (VSB filter) since an analogue video signal is vestigial sideband modulated. Such VSB filter normally has a transfer function with a so-called Nyquist-slope, which ensures that after the VSB filter the video signal may be obtained by simply generating a real part of the filtered signal.

Since the phase locked loop for following the phase and/or the frequency of the carrier of the video signal is situated before the VSB filter with the Nyquist-slope, it is easier for the PLL to lock to the carrier of the video signal, because the analog signal is symmetric in a region adjacent to the carrier. Otherwise, when first filtering with the VSB filter, the spectrum of the analog television signal is no longer symmetric in a region adjacent to the carrier, so that it is more difficult for the phase locked loop to lock to the carrier.

In a further embodiment, said analogue television signal comprises a sound signal and said analogue television signal is shifted by a first frequency distance, so that the sound signal in said complex base band is around a frequency 0 and said shifted sound signal is filtered with a low pass filter. Such filtering with the low pass filter is easier to perform in the digital domain than building a corresponding band pass filter.

In a further embodiment, said first frequency distance is adjusted to a distance between the video signal and the sound signal of different analogue television signals used by different analogue television systems. So it is possible to suppress the sound signal, even for different distances between the video signal and the sound signal by simply adjusting the first frequency distance which shifts the sound signal in said complex base band.

In a further embodiment said video signal is shifted by a second frequency distance so that the video signal is centered around frequency 0 and afterwards said video signal is filtered with a low pass video filter. When the video signal is centered around frequency 0 the low pass video filter is easier to build than a corresponding band pass filter.

In a further embodiment said second frequency distance is adjusted to a band-width of said video signal, thereby giving the possibility to optimally centering said video signal even for different bandwidths of different video signals used in different analogue television systems.

In a further embodiment the bandwidth of said low pass video filter is adjusted to a bandwidth of said video signal. With this step of adjusting the bandwidth, the low pass video filter can be optimally adjusted to different bandwidths of different video signals in different analogue television systems.

In a further embodiment a group delay is adjusted in accordance with the group delay of a transmitter of said analogue television signal. Different analogue television transmission systems use different group delays within their transmitters. By adjusting this group delay it is possible to demodulate different analogue television signals from different analogue television systems.

In a further embodiment a digital demodulator for analogue television signals is provided, comprising a base band conversion block, configured to digitally convert said analogue television signal received by a tuner into a complex base band; a phase locked loop (PLL) configured to follow the phase and/or the frequency of a received carrier of said video signal and a vestigial sideband filter, wherein the vestigial side band filter is arranged behind said phase locked loop on a signal demodulation path.

Since the vestigial side band filter is situated in the signal demodulation path behind the phase locked loop, the phase locked loop can easier follow the frequency and/or phase of the received carrier of said video signal, because the video signal is symmetric in a region adjacent to the carrier.

In a further embodiment, the digital demodulator further comprises a sound trapping unit arranged between said base band conversion block and said phase locked loop on said signal demodulation path, the sound trapping unit being configured to suppress said sound signal. After this sound trapping unit the sound signal is no longer present on the signal demodulation path, so that it cannot disturb a video demodulation.

In a further embodiment said sound trapping unit is configured to be controlled to notch sound signals, which are situated at different frequency distances from said video signal in different analogue television signals. Since the sound trapping unit can be used to suppress sound signals at different positions, it can be used for different analogue television signals which might have different frequency distances between the video signal and the sound signal.

In a further embodiment a frequency shifting unit is provided configured to shift said sound signal into a notch region of a predetermined transfer function of a sound filter. With this frequency shifting unit the sound signal at different positions with respect to the video signal can be effectively shifted in a corresponding transfer function of the sound filter.

In a further embodiment a video filter and a further frequency shifting unit are provided, arranged on said signal demodulation path behind said sound trapping unit, said further frequency shifting unit being configured to shift said video signal so that a center frequency of said video signal is at a center frequency of said video filter in said complex base band. With the help of the further frequency shifting unit the video signal can be centered, e.g. around frequency 0, so that a video filter can be realized as a low pass filter.

In a further embodiment, the video filter is configured to have a transfer function, which can be adjusted to different bandwidths of different video signals. Within this embodiment it is easy to demodulate video signals having different bandwidths due to different analogue television systems.

In a further embodiment a group delay equalizer is provided for compensating a group delay of a transmitter of said analogue television signal, wherein said group delay equalizer is adjustable in accordance to different group delays of different transmitters of different analogue television transmission systems.

In a further embodiment said base band conversion block includes the television signal filter with a transfer function, wherein said transfer function is adjustable to different bandwidths of different analogue television signals. As worldwide only three different bandwidths are in use, the corresponding television signal filter might be implemented with three sets of fixed coefficients.

In a further embodiment the digital demodulator comprises a ghost canceling equalizer and a level detector arranged on the signal receiving path behind said ghost canceling equalizer. The level detector is configured to detect a level of a synchronization pulse. The level is used to control the gain of a base band automatic gain control, which serves as an input signal provider for the digital automatic gain control and the automatic gain control. After the ghost canceling equalizer the synchronization pulse is not disturbed anymore by multipath echos, so that there is less crosstalk and the amplitude of the synchronization pulse, which is used for the base band automatic gain control achieves a more constant value.

In a further embodiment a television set is provided said television set or television apparatus comprising a digital demodulator as described above and a tuner, configured to receive said analogue television signal.

The digital demodulator might be realized as an Application Specific Integrated Circuit (ASIC), which might be controlled by external signals to optimally adjust the corresponding blocks to the analogue television system, in which a television receiver with this ASIC is used.

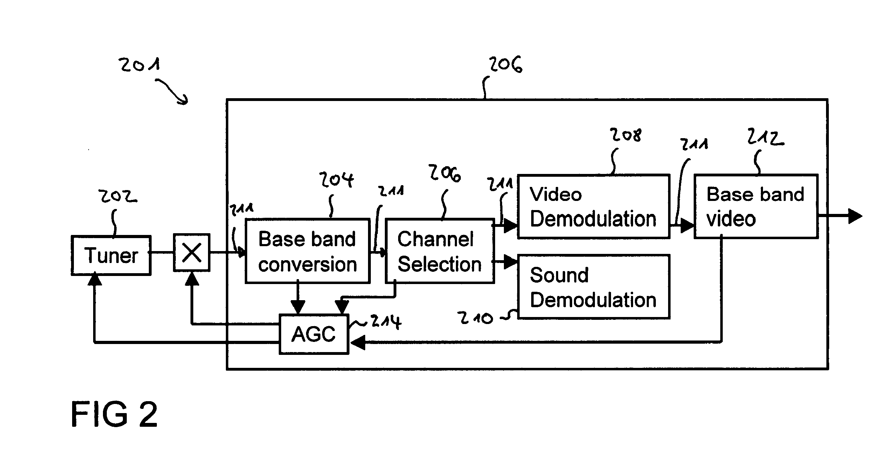

In Fig. 2 a top level block diagram of a digital demodulator 200 is depicted, which is a part of a television set 201. A tuner 202 is receiving the analogue television signal, which is converted by a base band conversion block 204 into a digital complex base band.

The digitally converted television signal is input into a channel selection block 206 which outputs a video signal into a video demodulation block 208 and a sound signal into a sound demodulation block 210. The output signal from the video demodulation block 208 is input into a base band video block 212 from which control signals for an automatic gain control 214 are provided accordingly adjust the base band conversion block 204 and the tuner 202.

The base band conversion block 204, the channel selection block 206, the video demodulation block 208 and the base band video block are arranged along a signal demodulation path 211.

The received analogue television signal is converted from a low intermediate frequency signal into the complex base band. In the complex base band, frequency shifts can be performed without additional filtering. The different blocks use this frequency shift property to center the corresponding signals as needed and to apply filters with real-valued coefficients to the signal, thereby reducing the calculation efforts.

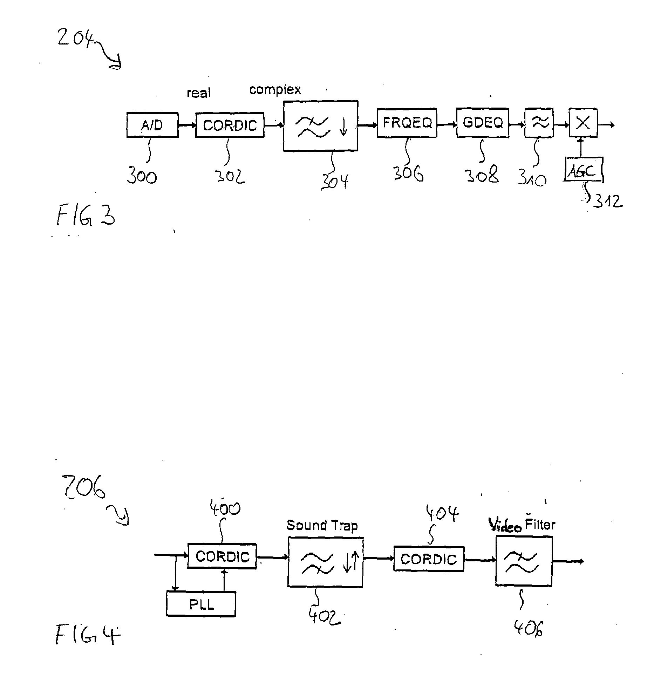

In Fig. 3 a block diagram of the base band conversion block 204 is depicted.

An analogue-to-digital converter 300 converts the received analogue television signal from the tuner 202 into the digital domain and input the digitized signal into a first frequency shifting unit 302, which is realized by using the so-called Cordic-algorithm (for coordinate rotation digital computer).

The Cordic-algorithm, which is also called digit-by-digit method or Volder's algorithm, is a simple and efficient algorithm to calculate hyperbolic and trigonometric functions. It is commonly used since it only requires small look-up tables, bit shifts and additions to calculate the hyperbolic and trigonometric functions.

Using a frequency shifting unit 302 for the base band conversion has the advantage that the value of center frequency can be changed easily. Within the base band conversion block 204 the signal is converted from a variable input sample rate to a fixed device-internal sample rate by a sample rate converter 304. A frequency equalizer 306 and a group delay equalizer 308 are used to compensate for a group delay and a frequency dependency of the tuner 202.

After the group delay equalizer 306 a channel filter 310 is provided, which has a channel band-width of the analogue television channels. As world-wide only three band-width are in use, this can be implemented as a channel filter with three sets of fixed coefficients. This channel filter 310 is used for cutting off neighboring channels of the analogue TV channels. An automatic gain control unit 312 compensates insufficient tuner 202 gain and power loss due to adjacent channels.

In Fig. 4 the block diagram of the channel selection block 206 is depicted. A further frequency shifting unit 400, based on the Cordic algorithm is provided to shift the sound carrier to a frequency 0 to afterwards suppress the sound signal with a high pass filter 402. After filtering out the sound signal the remaining video signal is shifted so that a centre frequency of the video signal is centered around 0 in an additional frequency shifting unit 404. The additional frequency shifting unit 404 is also realized by a Cordic algorithm, so that a video filter 406 can be used to be adjusted to different vestigial sideband widths and video signal bandwidths after the sound signal has been suppressed.

For the video filter 406 a filter with four different bandwidths supports the world-wide used video signal bandwidths. The further frequency shift unit 400 and the additional frequency shift unit 404 allow for fully flexible vision carrier to sound carrier distance adjustment.

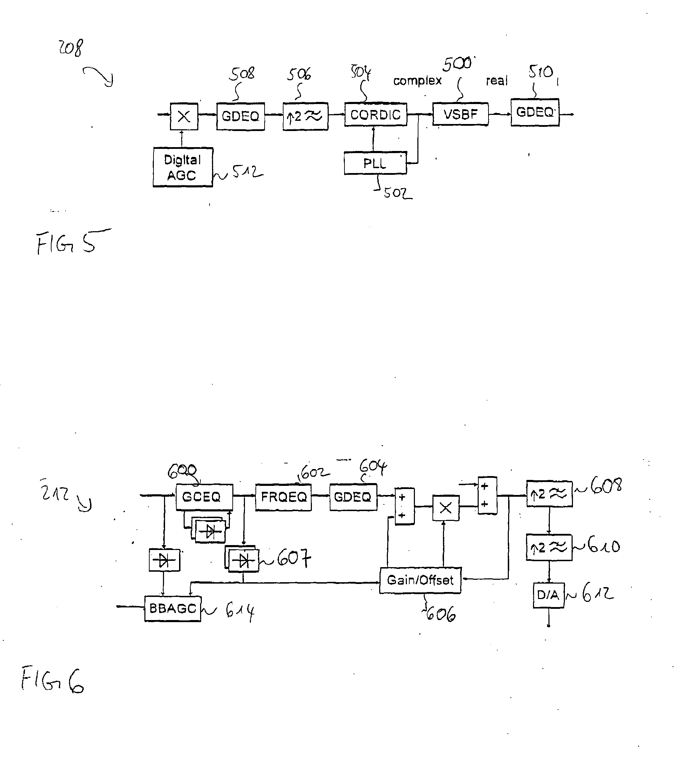

In Fig. 5 a block diagram of the video demodulation block 208 is depicted.

Within the video demodulation block 208 a vestigial sideband filter 500 is used for reducing the vestigial sideband of the analogue television signal. The vestigial sideband filter is arranged on the signal demodulation path 211 behind a phase locked loop PLL 502, which is used together with a fourth frequency shifting unit 504 to adjust the remaining video signal to the vestigial sideband filter.

The phase locked loop 502 together with the fourth frequency shifting unit 504 are used to shift the video carrier to frequency 0. An interpolator 506 and a group delay equalizer 508 to compensate a group delay from the interpolator 506 are provided at the input of the fourth frequency shifting unit 504.

The video demodulator block 208 implements a Nyquist-slope filter in the vestigial sideband filter 500. All video carrier phase locked loops are using the signal before the vestigial sideband filter 500.

After the vestigial sideband filter 500 a group delay equalizer 510 is provided which is fully programmable to allow support of all regionally required group delay characteristics of the video signal of different analogue television systems.

A digital automatic gain control (AGC) at the input of the video demodulation block 208 can be made very fast to compensate e.g. airplane flutter, which results from reflection at airplanes flying above a roof antenna, which might be connected to the tuner 202.

In Fig. 6 the base band video block 212 is depicted in a schematic block diagram.

In this base band video block 212 a ghost canceling equalizer 600 is provided for canceling ghost signals resulting from multi-path reception. A further frequency equalizer 602 and a further loop delay equalizer 604 are provided and afterwards a signal is further handled in a gain and offset block 606 which adjusts the video output level to interface requirements.

Two further interpolators 608, 610 are used before a digital-to-analogue converter 612 which outputs the video signal to e.g. a display of a television set.

In the signal receiving path 211 behind the ghost canceling equalizer 600 a level-detector 607 is connected and used for deriving a level of a synchronization pulse of the analogue television signal. Said level is used to control the gain of a base band automatic gain control 614, which serves as an input signal provider for the digital automatic gain control 512 and the automatic gain control 312. The level-detector is also connected to the gain offset block 606. After the ghost canceling equalizer 600 the synchronization pulse is not disturbed anymore by multipath echos, so that there is less crosstalk and the amplitude of the synchronization pulse, which is used for the base band automatic gain control achieves a more constant value.

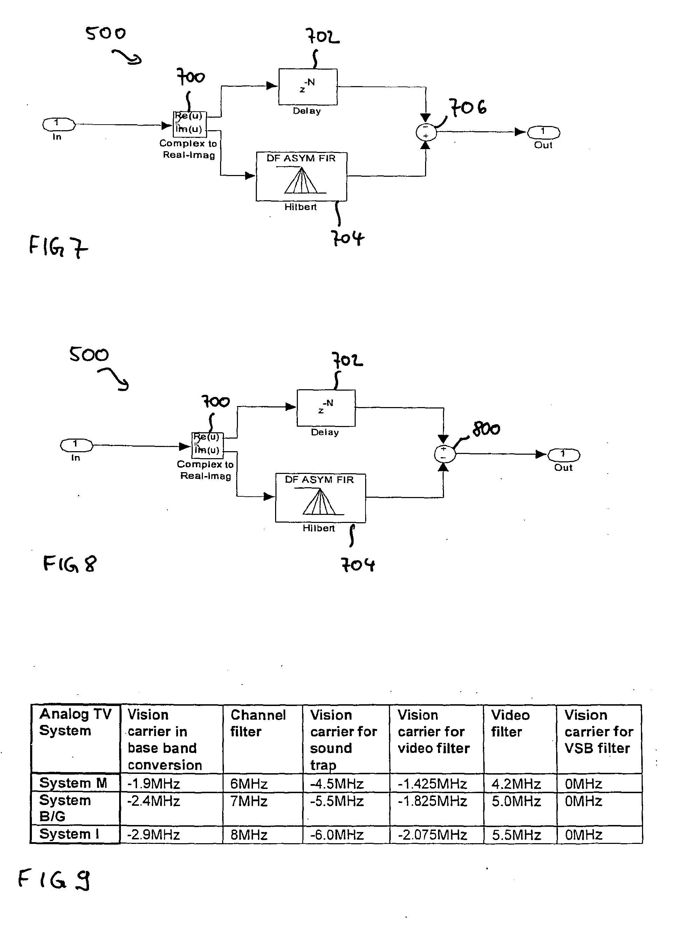

In Fig. 7 a first embodiment of a vestigial side band filter 500 is depicted, which embodiment is used for negative-modulated video signals, which is normally present in all analogue television systems with the exception of analogue television system L. A complex to real-imaginary converter 700 calculates the real part of a complex input signal and the imaginary part of a complex input signal. The real part is directed via a delay unit 702 to a negative input of an adder 706. The complex part is filtered in a Hilbert FIR-filter 704 and the filtered signal is directed to a positive input of the adder 706. The adder generates a sum signal from the signal as an output signal of the vestigial side band filter 500.

For the system L, which is based on a positive-modulated video signal, an embodiment of the vestigial side band filter 500 is depicted in Fig. 8. The complex to real-imaginary converter 700 calculates the real part of the complex input signal and the imaginary part of the complex input signal. The real part is directed via a delay unit 702 to a positive input of the adder 706. The complex part is filtered in a Hilbert FIR-filter 704 and the filtered signal is directed to a negative input of the adder 706. The adder generates a sum signal from the signal as an output signal of the vestigial side band filter 500.

With the embodiments depicted in Fig. 7 and 8 the vestigial side band filter 500 can change a negative-modulated video signal into a positive-modulated video signal or a positive-modulated video signal into a negative-modulated video signal. So the following base band video block 212 might be implemented independently of modulation scheme of the video signal.

So in accordance to a modulation scheme of the video signal, whether it is positive-modulated or negative-modulated, the vestigial side band filter 500 can be easily adjusted by simple inverting the input signals of the adder 706.

In Fig. 9 a table summarize the bandwidths and center frequency adjustment for exemplary standards of analogue television systems. In Fig.9 the corresponding values for the M-system (NTSC) and the two PAL-systems B/G and I are depicted.

In a first column the frequency of the video or vision carrier after the base band conversion in the base band conversion block 204 is shown. In a second column the bandwidth of the channel filter 310 for the different systems is depicted. In a third column the position of the vision or video carrier in the sound trapping unit 402 is depicted. In the fourth column the position of the vision or video carrier in the video filter 406 is depicted. In the fifth column the bandwidth of the video filter 406 is depicted. In the sixth column the position of the vision carrier for the VSB-filter 500 is depicted.

So the signal demodulating is performed in the complex base-band, which means that the analog television signal may span from -5 MHz to 5 MHz, if an internal sample rate of 10 MHz is used. The signal is shifted in the frequency domain several times to achieve a universal adaptation to all worldwide analogue television broadcast systems.

## Claims

1. Digital demodulator (200) for analogue television signals, wherein said analogue television signals comprise a video signal, comprising:
a base band conversion block (204) configured to digitally convert said analogue television signal received by a tuner (202) into a complex base band;
a phase locked loop (502) configured to follow a phase and/or a frequency of a received carrier of said video signal, and
a vestigial side band filter (500), wherein said base band conversion block (204), said phase locked loop (502) and said vestigial side band filter (500) are arranged along a signal demodulation path (211) and wherein said vestigial side band filter (204) is arranged behind said phase locked loop (502) on said signal demodulation path (211).

2. Digital demodulator (200) according to claim 1, wherein said analogue television signals comprise a sound signal, said demodulator further comprising:
a sound trapping unit (402) configured to suppress said sound signal, said sound trapping unit (402) being arranged on said signal demodulation path (211) between said base band conversion block and said phase locked loop (502).

3. Digital demodulator (200) according to claim 2, wherein said sound trapping unit (402) is configured to be controlled to suppress sound signals, which are situated at different frequency distances from said video signal in different analogue television signals.

4. Digital demodulator (200) according to claim 3, further comprising:
a sound filter (402) with a predetermined transfer function;
a frequency shifting unit (400), configured to shift said sound signal into a notch region of said predetermined transfer function.

5. Digital demodulator (200) according to any of claims 2 to 4, further comprising:
a video filter (406);
a further frequency shifting unit (404) arranged on said signal demodulating path (211) behind said sound trapping unit (402), said further frequency shifting unit (404) being configured to shift said video signal so that a center frequency of said video signal is at a center frequency of said video filter (406) in said complex base band.

6. Digital demodulator (200) according to claim 5, wherein said video filter (406) is configured to have a transfer function, which can be adjusted to different band widths of different video signals.

7. Digital demodulator (200) according to any of claims 1 to 6, further comprising:
a group delay equalizer (510) for compensating a group delay of a transmitter of said analogue television signal, said group delay equalizer (510) being adjustable in accordance to different group delays of different transmitters.

8. Digital demodulator (200) according to any of claims 1 to 7, wherein said base band conversion block (204) includes a channel filter (310) with a transfer function, said transfer function being adjustable to different band widths of different analogue television signals.

9. Digital demodulator (200) according to any of claims 1 to 8, wherein said vestigial side band filter (500) is configured to change a negative-modulated video signal to a positive modulated video signal or to change a positive-modulated video signal to a negative modulated video signal.

10. Digital demodulator (200), according to any of claims 1 to 9, further comprising:
a ghost canceling equalizer, configured to cancel ghost signals; and
a level detector, arranged on said signal receiving path behind said gost canceling equalizer, configured to determine a level of a synchronisation pulse.

11. Television set, said television set comprising
a digital demodulator (200) according to any of claims 1 to 10; and
a tuner (202) configured to receive said analogue television signals.

12. Method for digitally demodulating analogue television signals, wherein said analogue television signals comprise a video signal, comprising:
converting said analogue television signal into a complex base band;
following a phase and/or a frequency of a carrier of said video signal; and
filtering said video signal with a vestigial band filter (500) after said step of following said phase and/or said frequency.

13. Method according to claim 12, wherein said analogue televisions signals comprise a sound signal, said method further comprising:
shifting said analogue television signal by a first frequency distance, so that said sound signal in said complex base band is around a frequency 0; and
filtering said sound signal with a low pass filter (402).

14. Method according to claim 13, further comprising:
adjusting said first frequency distance to a distance between said video signal and said sound signal of different analogue television signals.

15. Method according to any of claims 13 or 14, further comprising:
after having filtered out said sound signal, shifting said video signal a second frequency distance so that it is centered around frequency 0; and
filtering said video signal with a low pass video filter (406).

16. Method according to claim 15, further comprising:
adjusting said second frequency distance to a band width of said video signal.

17. Method according to any of claims 15 or 16, further comprising:
adjusting a band width of said low pass video filter to a band width of said video signal.

18. Method according to any of claims 12 to 17, further comprising:
adjusting a group delay in accordance with a group delay of a transmitter of said analogue television signal.

19. Method according to any of claims 12 to 18, further comprising:
detecting a level of a synchronisation pulse of said analogue television signal after a ghost cancelling has occurred.
